**Europäisches Patentamt**

**European Patent Office**

**Office européen des brevets**

(19)

(11) Publication number : **0 196 751 B1**

# EUROPEAN PATENT SPECIFICATION

(12)

(45) Date of publication of patent specification :
23.08.95 Bulletin 95/34

(51) Int. Cl.$^6$ : **G06F 9/30**

(21) Application number : **86300930.4**

(22) Date of filing : **11.02.86**

(54) Microprocessor with block move instruction.

Divisional application 95100900.0 filed on 11/02/86.

(30) Priority : **12.02.85 US 701824**
**12.02.85 US 701825**
**12.02.85 US 701826**
**12.02.85 US 701827**
**12.02.85 US 701828**
**12.02.85 US 701829**

(43) Date of publication of application :
**08.10.86 Bulletin 86/41**

(45) Publication of the grant of the patent :
**23.08.95 Bulletin 95/34**

(84) Designated Contracting States :
**DE FR GB NL**

(56) References cited :
**EP-A- 0 073 419**
**EP-A- 0 086 307**
**US-A- 4 398 245**
**RADIO FERNSEHEN ELEKTRONIK, vol. 33, no. 12, Dezember 1984, pages 773-776, Ost-Berlin, DD; W. MATTHES:**
**"Multimikrorechnersysteme 9"**
**IBM TECHNICAL DISCLOSURE BULLETIN, vol. 26, no. 11, 11th April 1984, pages 5794-5795, New York, US; M.N. DAY et al.: "Loadable program storage feature for an existing fixed program device"**

(56) References cited :
**IEEE INTERNATIONAL SOLID-STATE CIRUITS CONFERENCE, vol. 28, 32nd conf., February 1985, pages 90-91, 316-317, IEEE, New York, US; S. MAGAR et al.: "An NMOS digital signal processor with multiprocessing capability"**

(73) Proprietor : **TEXAS INSTRUMENTS INCORPORATED**
**13500 North Central Expressway**
**Dallas Texas 75265 (US)**

(72) Inventor : **Magar, Surendar S. c/o Honeywell Inc.**
**1150 E. Clexenne Mt. Blvd.**
**Colorado Springs CO 80906 (US)**
Inventor : **Simpson, Richard D.**
**7930 Corporate Dr. No. 66**
**Houston, TX 77036 (US)**
Inventor : **Essig, Daniel L.**
**9850 Pagewood No. 1805**
**Houston Texas 77042 (US)**
Inventor : **Caudel, Edward R.**
**deceased (US)**
Inventor : **Marshall, Stephen P.**
**2007 Highcrest Drive**
**Missouri City, TX 77489 (US)**
Inventor : **McDonough, Kevin C.**
**2102 Ashgrove**
**Houston, TX 77077 (US)**

(74) Representative : **Abbott, David John et al**
**Abel & Imray**
**Northumberland House**
**303-306 High Holborn**
**London, WC1V 7LH (GB)**

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 196 751 B1

## Description

This invention relates to a microprocessor with block move instruction.

Figures 1 and 2 accompanying this specification appear in EP-A-0,086,307 and US-A-4,491,910.

In EP-A-0,073,419 there is described a dynamically programmable processing element for use in conjunction with a microprocessor to perform complicated arithmetic procedures, in particular such as would be required for voice processing. The microprocessor effects the transfer of programs and data to the dynamically programmable processing element for the tasks it is required to perform.

In RADIO FERNSEHEN ELECTRONIK, Vol.33, No.12, Dec. 1984, pages 773-776, an article entitled "Multimikrorechner systeme 9" by W. Mathes, discloses the transfer of an entire program by a block instruction from an external memory to the internal memory of a microprocessor,

In IBM DISCLOSURE BULLETIN, Vol.26, No.11, April 1984, pages 5794-5795, an article entitled: "Loadable Program Storage Feature for an Existing Fixed Program Device" by M. N. Day et al, discloses the addition of RAM to the ROM instruction storage normally provided in the processor concerned so that the instructions can be extended. Loading of the RAM and an address counter for the RAM is effected via the I/O bus using further instructions stored in an additional ROM. The RAM instruction storage is arranged to be accessible by the processor's instruction fetch operation.

EP-A-0 086 307 discloses a microcomputer system for digital signal processing including a microprocessor device formed in a single integrated circuit and having data input and output terminals and address output terminals, the microprocessor device comprising an arithmetic logic unit, a read/write data memory, a read-only program memory, control means for controlling the operation of the arithmetic logic unit in response to instruction words and internal bus means interconnecting the components of the device and coupled to the terminals of the device.

It is the principal object of this invention to provide improved features of a microcomputer device and system, particularly one adapted for real-time digital signal processing or the like. Another object is to provide a high-speed microcomputer of enhanced capabilities.

According to the present invention there is provided a microcomputer device formed in a single integrated circuit and having data input and output terminals and address output terminals, the device comprising within said integrated circuit

an arithmetic logic unit having a data input and a data output,

a control circuit responsive to instruction words selected from an instruction set having outputs connected to said arithmetic logic unit, the control circuit generating micro-control signals on said output to cause said arithmetic logic unit to execute instructions represented by the instruction words,

a read/write data memory having an address input and data input and output,

a program memory having an address input and at least a program output, and

internal data and address buses interconnecting said arithmetic logic unit, said control circuit and said memories and coupled to said data input and output terminals and said address output terminals,

characterised in that

said control circuit includes a repeat counter, and said instruction set includes a "repeat" instruction word containing a number, the "repeat" instruction word being followed by another selected instruction word from said instruction set, and being such that the instruction represented by said selected instruction word is executed by said control circuit the number of times defined by the number included in said "repeat" instruction word, said number being stored in said repeat counter which is decremented with each execution of the selected instruction.

## SUMMARY OF THE INVENTION

In accordance with one embodiment, features of the invention are included in a system for real-time digital signal processing which employs a single-chip microcomputer device having separate on-chip program ROM and data RAM, with separate address and data paths for program and data. An external program address bus allows off-chip program fetch in an expansion mode, with the opcode returned by an external data bus. A bus interchange module allows transfer between the separate internal program and data busses in special circumstances. The internal busses are 16-bit, while the ALU and accumulator are 32-bit. A multiplier circuit produces a single state 16x16 multiply function separate from the ALU, with 32-bit output to the ALU. One input to the ALU passes through a 0-to-15 bit shifter with sign extension.

In another embodiment, a processor chip is constructed as above, but with no on-chip program ROM. Instead, another on-chip RAM is included, and this additional RAM may be configured as either program or data memory. Thus, the processor may operate with all off-chip program memory and a large on-chip data memory,

2

or with program execution from on-chip RAM (downloaded from off-chip program memory).

BRIEF DESCRIPTION OF THE DRAWINGS

The novel features believed characteristic of the invention are set forth in the appended claims. The invention itself, however, as well as other features and advantages thereof, will be best understood by reference to the detailed description which follows, read in conjunction with the accompanying drawings, wherein;

Figure 1 is an electrical diagram in block form of a microcomputer system employing features of the invention;

Figure 2 is an electrical diagram in block form of an MOS/LSI microcomputer device (including a CPU or central processor unit) employed in the system of Fig. 1 and utilizing features of the invention;

Figure 3 is an electrical diagram in block form of microcomputer device, similar to Fig. 2, but including features of another embodiment of the invention;

Figures 4a and 4b are memory maps of the logical address spaces for the devices of Fig. 2 and Fig. 3, respectively;

DETAILED DESCRIPTION OF SPECIFIC EMBODIMENT:

MICROPROCESSOR SYSTEM

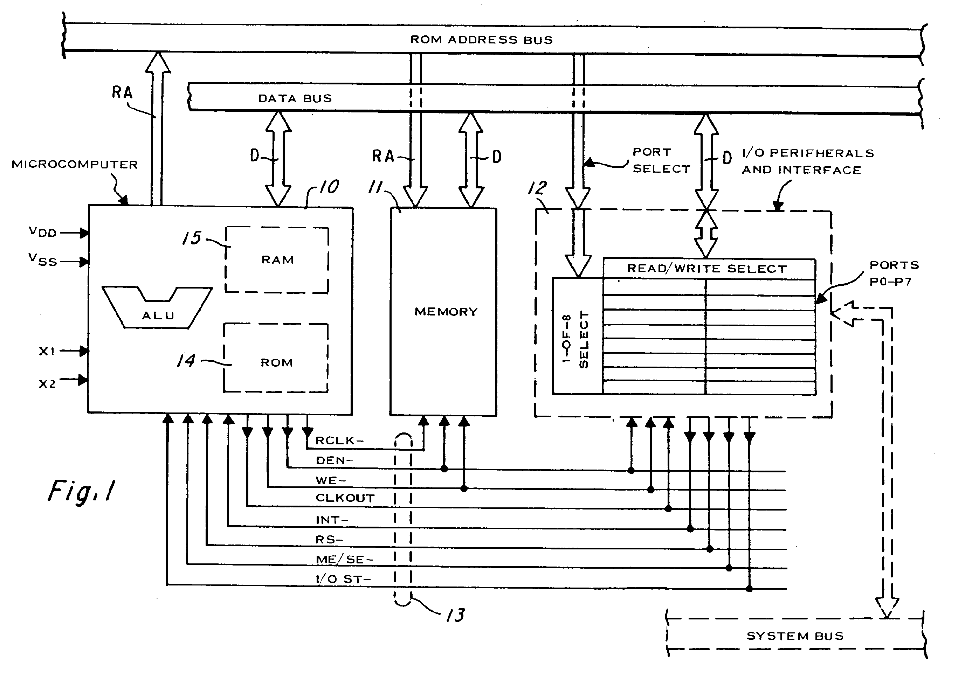

The microcomputer device to be described herein is primarily used for signal processing, but concepts thereof may be used in processor devices of various configurations, and these devices may be used in many different systems; in one embodiment the microcomputer is used in a system shown in generallized form in Figure 1. The system may be, for example, a voice communication system, a speech analysis system, a small "personal" or "home" computer, a single-board general purpose microcomputer, a word processing system, a computer terminal having local processing capability with display and typewriter keyboard, or any one of many applications of various types. The system includes a single-chip MOS/LSI central processing unit or microcomputer 10 which will be described in detail, along with a program or data memory 11 and input/output or I/O devices 12. Usually the I/O devices 12 for the typical system include analog-to-digital and/or digital-to-analog converters, a modem, a keyboard, a CRT display, a disc drive, etc. Often the I/O 12 includes coupling to a general purpose processor; that is, the microcomputer 10 is an attached processor in a larger system with interface via the I/O 12. The microcomputer 10, program or data memory 11 and I/O 12 communicate with one another by two multibit, parallel address and data busses, D and RA, along with a control bus 13.

In general terms, the system of Figure 1 functions in the following manner: the microcomputer 10 fetches an instruction word internally by accessing the ROM 14 or externally by sending out an address on the ROM address bus RA to the memory 11 (and RCLK- on control bus 13). If external, the instruction word is received back via the data bus D from the addressed location in the memory 11. This instruction is executed in the next machine cycle (of length of 200 ns defined by a 20 MHz clock or crystal X1, X2) while a new instruction is being fetched; execution of an instruction may include accessing the on-chip RAM 15 for an operand, or writing a result into data RAM 15, and an arithmetic or logic operation in ALU.

In the example to be described in detail, a 12-bit instruction address applied internally to ROM 14 or externally to the RA bus directly addresses $2^{12}$ or 4K words of program instruction or constants in ROM 14 and memory 11. When reading from memory 11, a DEN- (data bus enable bar) command is asserted on control bus 13. It is also possible to write into the memory 11, and for this purpose a WE- (write enable bar) command is asserted by the device 10 on one of the control bus lines 13; the memory 11 may contain read/write memory devices in some or all of the address space, so the WE- command permits a write function.

The I/O devices 12 are addressed as ports; this interface to external devices 12 is accomplished using the address and data busses RA and D and control bus 13, but the I/O devices 12 do not occupy locations in the logical address space like the memory 11. This is in contrast to conventional memory-mapped I/O.

Data input/output via I/O or peripherals 12 employs a 3-bit field RAp from the bus RA to select one of eight 16-bit ports P0-P7 in peripheral circuitry 12. Each port can be defined as either input or output by DEN- or WE-, so in effect these are sixteen 16-bit parts, eight in and eight out. The selected 16-bit port is addressed by RAp and DEN- or WE-, then accessed for read or write via the bus D. This operation uses one of the two instructions IN or OUT; on the control bus 13, WE is active for write or OUT, or DEN- is active for read or IN. A ROM clock RCLK is active on control bus 13 on every machine cycle except when either DEN- or WE- is active; that is, the memory 11 is activated by RCLK- for possible instruction word access from off-chip in each machine cycle, but if accessing peripheral 12 using DEN- or WEthen the RCLK- does not occur.

THE MICROCOMPUTER CHIP

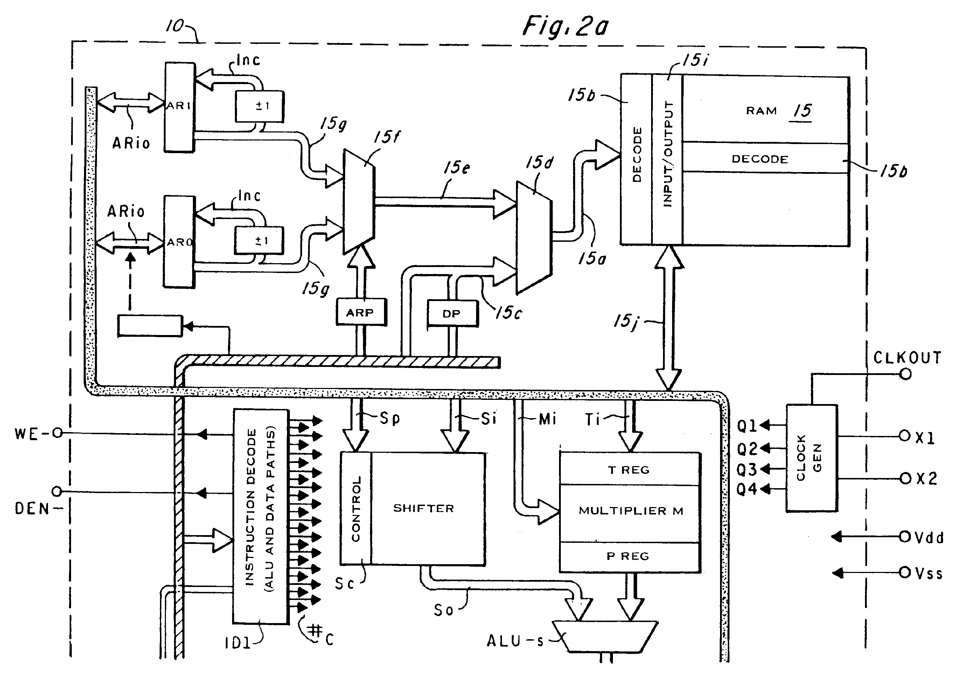

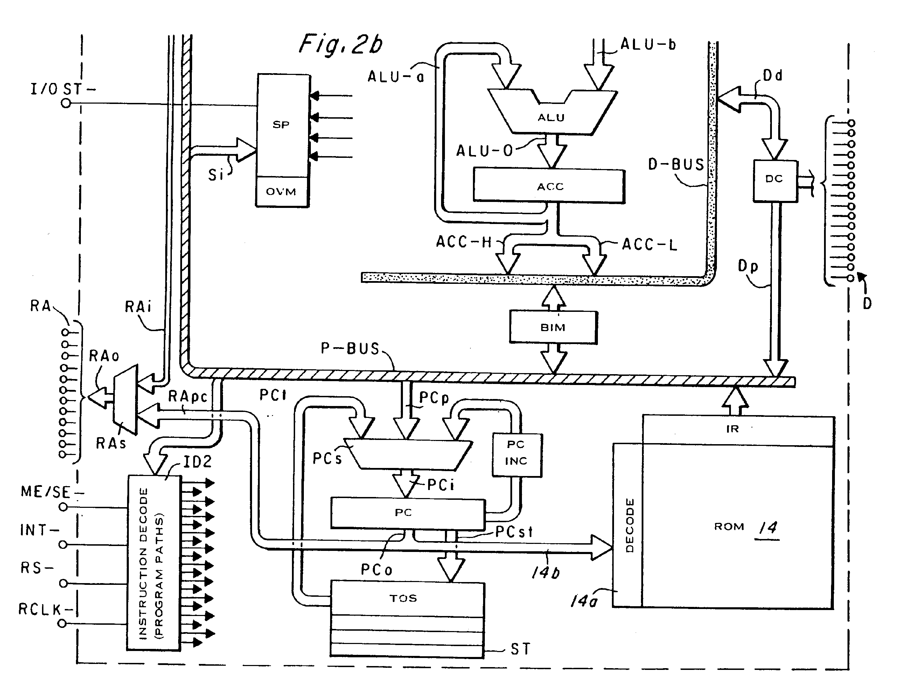

The internal architecture of the microcomputer 10 is shown in a detailed block diagram in Figure 2. This device is a single-chip semiconductor integrated circuit mounted in a standard 40-pin dual-in-line package or a chip carrier. Sixteeen pins or terminals of the package are needed for the 16-bit data bus D, twelve are used for the address bus RA and the remaining terminals are used for the power supply Vdd and Vss, the crystal X1, X2, and the control bus 13.

In addition to the program and data memory 14 and 15, the microcomputer 10 contains a central processing unit or CPU for the system of Figure 1, and this CPU includes a 32-bit arithmetic/logic unit or ALU, a 32-bit accumulator Acc to hold operands and results, multiplier M separate from the ALU, a shifter S which is one input to the ALU, status or flag decode SD, and an instruciton decoder ID1 which receives the current instruction word and generates the control bits for the CPU and data memory portions of the device 10.

The program memory 14 has associated with it a program counter PC to hold the instruction address used to access the ROM 14 or sent out on bus RA to the memory 11, an instruction register IR to receive the instruction word from ROM 14, a stack ST to save program memory addresses, and an instruction decoder ID2 which receives the current instruction word and generates control bits for the program memory portion of the microcomputer. The instruction decoders IDj and ID2 of course may be combined into one larger control ROM, or indeed split inot smaller PLAs or random logic.

Associated with the data memory 15 are two auxiliary address registers AR0 and AR1 for the data memory 15, a page register ARP to select between the registers AR0 and AR1 for use as the data memory address, and a data page buffer DP to hold certain bits of the data memory address.

The CPU is oriented around two internal busses, a 16-bit program bus (P-Bus) and a 16-bit data bus (D-Bus). Program access and data access can thus occur simultaneously, and the address spaces are separate. The microcomputer is thus of the Harvard architecture, although a bus interchange module BIM permits loading the program counter PC from Acc, for example, or accessing ROM 14 for constants via P-Bus, BIM and D-Bus.

The two major requirements for a signal processing microcomputer are high speed arithmetic and flexibility. Performance is achieved by using separate, principally on-chip program and data memories 14 and 15, a large single accumulator Acc and a parallel multiplier M. A special purpose operation data move, is defined within the data memory 15 which further enhances the performance in convolution operations. Flexibility has been achieved by defining an instruction set as will be described with reference to Table A, incorporating memory expansion and a single level of interrupt.

The device can be configured with, for example, less than 2K or $2^{11}$ words of on-chip program memory 14 yet the architecture allows for memory expansion up to 4K or $2^{12}$ words by the addition of external program memory in the memory 11. In addtion, a separate mode allows the device 10 to be configured as a system emulation device; in this "system emulator" mode, the entire 4K memory space is external and the ROM 14 is not used.

SIGNAL PROCESSOR WITH DUAL RAM

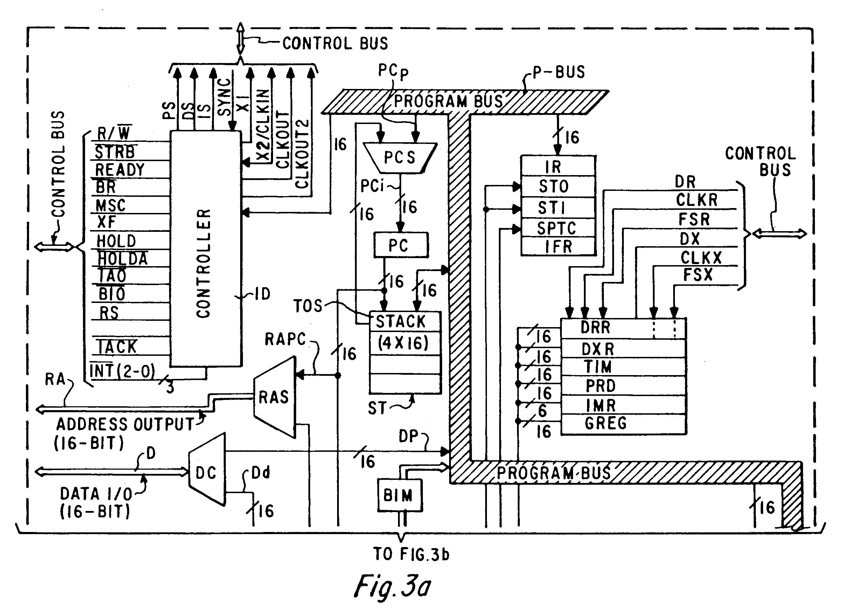

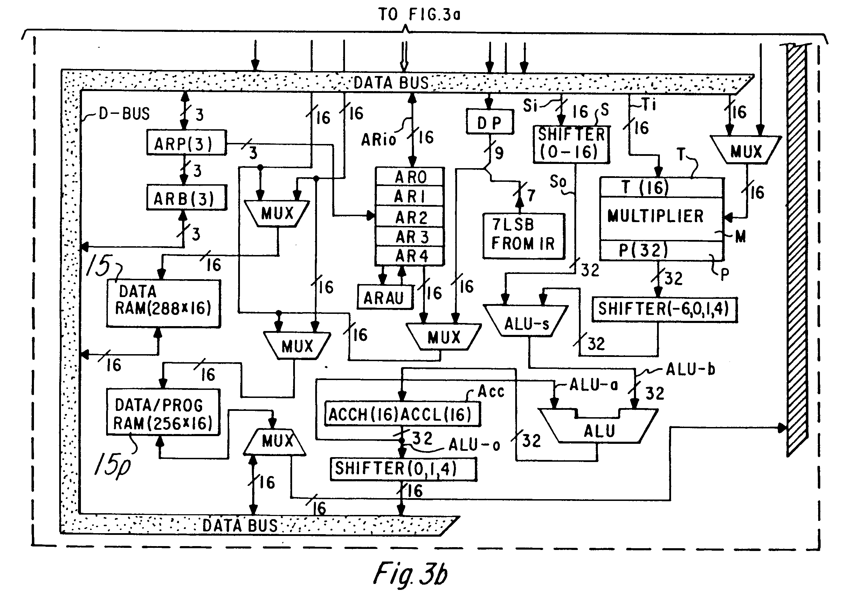

With reference to Fig. 3, another embodiment of the processor of Figs. 1-2 will be described. The device of Fig. 3 is the same as the chip 10 of Fig. 2 in most respects, and indeed executes the instruction set of Table A of US Patent 4,491,910 (with certain exceptions as will be described) and also executes important additional instructions. The processor of Fig. 3 contains a data bus D-bus and a program bus P-bus as before, along with an arithmetic/logic unit ALU, a multiplier M, an accumulator Acc, a barrel shifter S with sign extension, a program counter PC, a stack ST, auxiliary registers AR0 and AR1, and a data RAM 15; separate program and data paths are provided as before in the so-called Harvard architecture.

Differing from the embodiment of Fig. 2, however, the processor of Fig. 3 does not have an on-chip ROM 14, but instead has a second RAM 15P which is used for either data or program. Also, three more auxiliary registers AR2, AR3 and AR4 are employed.

An important feature is that the two RAMs 15 and 15P are dynamically reconfigurable, using the configure instructions as will be described that is, the memory 15P may be switched between use as a data memory just like the RAM 15, or use as a program memory (like the ROM 14 of Fig. 2). The processor can operate with no on-chip program memory by applying the output of the program counter PC to the external address bus RA and receiving the addressed instruction from an off-chip memory via external data bus D. Or, a block of instruction words can be loaded into the RAM 15P from an off-chip source using move instructions, then the RAM 15P used as the program memory for high speed execution of repetitive programs. In one example, the RAM 15 contains 288 words (16-bits per word), permanently mapped into the data memory space, while the RAM 15P contains 256 words which can be mapped into either the data memory space or the program memory space under program control. Thus, all 544 words of on-chip RAM 15 data bus D and 15P can be used as data memory, and instructions supplied from off-chip devices (memory 11 of Fig. 1) at full speed; or, in the other configuration, the 288 words of the RAM 15 can be used as data memory and the 256 words of RAM 15P used as program cache memory, so instruction words are downloaded from slower off-chip memory devices to the on-chip RAM and executed at full speed. Several block-transfer instructions are added for efficient management of these memory spaces; these instructions can move instruction words, data, or I/O information at up to one word per machine cycle across the address spaces, on-chip or off-chip.

The dual RAM architecture also allows the execution of a multiply/accumulate instruction in a single-cycle (the MAC instruction described below). In this case both the data bus D-bus and the program bus P-bus are used for carrying the operands to the multiplier M while the MAC instruction is being repeated. A data-move function implemented in the on-chip RAM 15 to provide the delay operation used for digital filtering algorithms; a "multiply/accumulate with data move" instruction MACD provides all the functions necessary for the implementation of a tap of transversal filter in a single machine cycle. The overflow often occurring as a result of multiply may be managed by using either a right shift on the 32-bit product at the ALU output, a saturation mode for the ALU output, similar to that of Fig. 2.

The processor of Fig. 3 has three primary memory addressing modes: direct, indirect, and immediate. In the direct mode, an address is defined in the instruction. In the indirect mode, an address is generated by one of the five 16-bit auxiliary registers AR0 to AR4. This auxiliary register file AR0-AR4 is supported by a 16-bit auxiliary register arithmetic unit ARA, which can be programmed to index an address, either up or down, in parallel with the data operations. The processor can also be programmed to branch on a comparison of the contents of selected auxiliary registers AR0-AR4, using the arithmetic unit ARA. The processor has a range of immediate instructions where data is defined as constants in the program, often used in filter algorithms. A table of constants may also be sorted in external program memory (memory 11 of Fig. 1) for reading into data memory space (i.e., RAM 15P) during program execution by using table-read instructions at a rate of one word per machine cycle. Data may also be moved from data memory space to program memory space at the same rate. A repeat instruction RPT provides for code compacting and reducing the branch overheads; the RPTK n instruction allows the execution of the next instruction n+1 times. For example, a 50-tap transversal filter code can be defined by two instructions, RPTK 49 and MACD.

The processor of Fig. 3 communicates to off-chip program, data, I/O devices, or other processors over its single external data bus D and the address bus RA along with the control bus 13. Depending upon the system requirements, the external devices (memory 11 or I/O 12 of Fig. 1) may have varying access times since wait states can be inserted into memory cycles. The processor also has several additional provisions for supporting multiprocessing interface, where part of the external data memory can be shared by several processors; i.e. two or more of the processors of Fig. 6 may be connected in a single system. A hold pin and three interrupt pins in the control bus 13 provide for host/slave system configurations and multitasking. Furthermore, several of these processors can be synchronized together at the clock level via a synchronize pin.

MEMORY MAPS

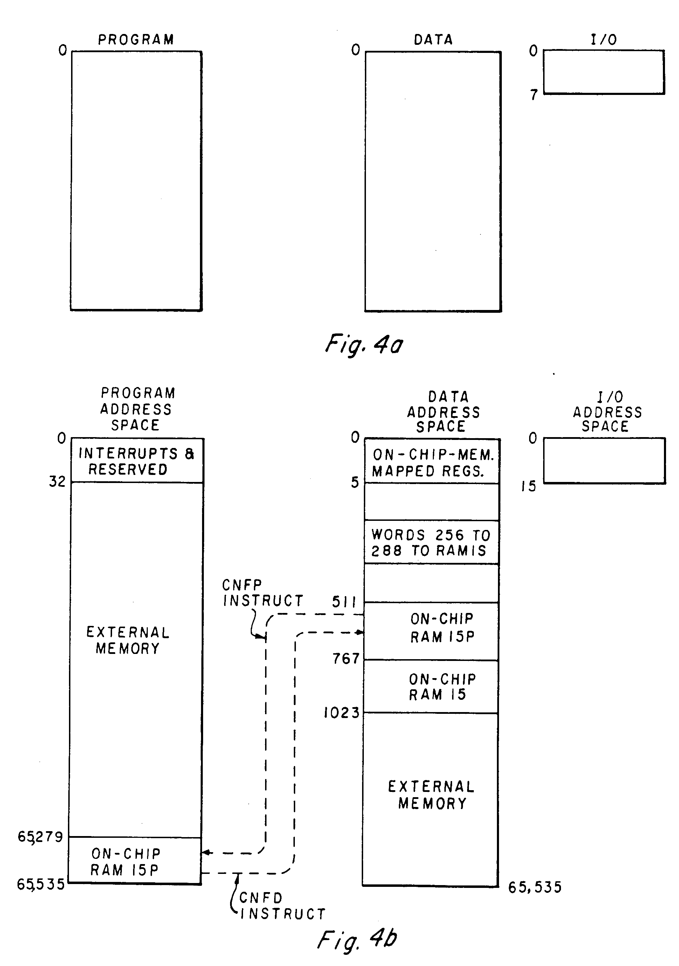

A memory map of the embodiment of Figures 1 and 2 is shown in Fig. 4a, and a memory map of the embodiment of Fig. 3 is shown in Fig. 4b. Since the processor 10 of Fig. 2 has a 12-bit address bus RA, the program memory space is 4K or 4096 words; the ROM 14 is located in less than 2K of this space. Likewise, an address range 4K of data memory is allowed, in which the 288 words of the RAM 15 are located. The I/O address space is 8 words defined by a 3-bit address on lines RAI of Fig. 2. In a similar manner, the device of Fig. 3, has three separate address spaces for program memory, data memory, and I/O, as shown in Fig. 4b. These spaces are distinguished externally by means of the program strobe, data strobe and I/O strobe signals on the control bus 13. The on-chip memory blocks are comprised of a total of 544 words made up of RAM 15 and RAM 15P. The program/data RAM block (256 words) resides in pages 4 and 5 of the data memory map when configured as data RAM, and in pages 510 and 511 when configured as program RAM. The block comprised of RAM 15 (always data RAM) resides in pages 6 and 7, and in the upper 32 words of page 0. Note that the remainder of the data memory map is composed of certain memory-mapped registers and reserved locations. Reserved locations may not be used for storage, and their contents are undefined when read.

The configure CNFD and CNFP instructions are used to configure the RAM 15P as either data or program memory. A BLKP instruction (block move from program memory to data memory) may be used to download program information to RAM 15P when it is configured as data RAM, and then a CNFP (configure block as program memory) instruction may be used to convert it to program RAM. Note that the first instruction fetch after a CNFD or CNFP instruction is taken from the previous memory configuration. Also note that a reset configures the RAM 15P as data RAM.

The processor of Fig. 3 has six registers that are mapped into the data memory space at address locations 0 to 5. These are the registers labeled DRR, DXR, TIM, PRD, IMR and GREG. The DRR register is a 16-bit serial port data transmit register. The TIM register is a 16-bit timer register, while PRD is a 16-bit period register used in timing functions. An interrupt mask register IMR contains a 6-bit interrupt mask. The GREG location is an 8-bit global memory allocation register. These registers may be accessed in the same manner as any other data memory location, except that block moves using BLKD are not allowed from these memory-mapped locations.

The processor provides instructions for data and program block moves and data move functions that efficiently utilize the configurable on-chip RAM 15P. The BLKD instruction moves a block within the data memory spaces, and the BLKP instruction moves a block from program memory space to data memory space. These instructions perform block moves from on- or off-chip memory.

The data move instruction DMOV is useful for implementing algorithms that use the socalled z delay operation, such as convolutions and digital filtering where data is being passed through a time window. The data move function is continuous across the boundary of the on-chip data memory blocks, but it cannot be used if off-chip data memory is referenced. Implemented in on-chip RAM 15 or 15P, the DMOV function is equivalent to that of the device of Fig. 2. DMOV allows a word to be copied from the currently addressed data memory location in on-chip RAM to the next higher location while the data from the addressed location is being operated upon in the same cycle (e.g., by the ALU). An operation in the auxiliary arithmetic unit ARU may also be performed in the same cycle when using the indirect addressing mode. The MACD (multiply and accumulate with data move) and the LTD (load T register, accumulate previous product, and move data) instructions can also use the data move function.

Program Counter and Stack

The processor of Fig. 3 contains a 16-bit program counter PC and a four-location hardware stack ST for storage of the contents of PC. The program counter PC addresses (via P-bus) the internal and external program memory in fetching instructions. The stack PC is used during interrupts, calls, returns, and some special-purpose instructions, such as BLKP/BLKD (block move from program/data memory to data memory) and TBLR/TBLW (table read/write), for transferring data between the program and data memory spaces. The program counter PC addresses program memory, either on-chip or off-chip, via the program address bus P-bus, by which an instruction is fetched from program memory and put in the instruction register. When the IR is loaded, the program counter PC is ready to start the next instruction fetch cycle. The PC address on-chip RAM 15P when it is configured as program memory, or it addresses off-chip program memory through the 16-bit address bus RA and the external data bus D. The program counter also address data memory during a BLKD instruction, which moves data blocks from one section of data memory to another. The contents of the accumulator Acc may be loaded into the program counter PC in order to implement "computed go to" operations, using the BIM, as before.

The PC is loaded either with PC+1 or with a branch address (for instructions such as branches, calls, or interrupts) to start a new fetch cycle. In the case of conditional branches where the branch is not taken, the PC is incremented once more beyond the location of the branch address, i.e., PC+2. The processor also has a repeat instruction feature which allows the execution of the next single instruction N+1 times, where N is defined by loading an 8-bit counter repeat counter RPTC. If this repeat feature is used, the instruction is executed, and the RPTC is decremented until the RPTC goes to zero. This feature is useful with many instructions, such as NORM (normalize contents of accumulator), MACD (multiply and accumulate with data move), and SUBC (conditional subtract).

The stack ST is accessible through the use of the PUSH and POP instructions; whenever the contents of the PC are pushed onto the top of the stack, the previous contents of each level are pushed down, and the fourth location of the stack is lost. Therefore, data will be lost if more than four successive pushes occur before a pop. The reverse happens on pop operations. Any pop after three sequential pops repeatedly yields the value at the fourth stack level. All four stack levels then contain the same value. Two additional instructions, PSHD and POPD, push a data memory value such as from RAM 15 onto the stack ST or pop a value from the stack to data memory. These instructions allow a stack to be built in data memory RAM 15 using software, for the nesting of subroutines/interrupts beyond four levels.

The interface to local memory consists of an external 16-bit parallel data bus D, a 16-bit program address bus RA, three pins in the control bus 13 for memory space select PS, DS, and IS, and various other system control signals. The R/W signal controls the direction of the transfer, and STRB provides a timing signal to control the transfer. The use of a READY signal allows wait-state generation for communicating with slower off-chip memories.

CPU

The CPU contains a 16-bit scaling shifter S, a 32-bit arithmetic logic unit (ALU) path, a 32-bit accumulator Acc, and additional shifters available at the outputs of both the accumulator and the multiplier.

The following steps occur in the implementation of a typical ALU instruction: (1) data is fetched from the RAM 15 on the data bus D-bus; (2) data is passed through the scaling shifter S and the ALU where the arithmetic is performed; and (3) the result is moved into the accumulator Acc. One input to the ALU is always transferred from the accumulator Acc; and the other input may be fed from the product register P of the multiplier M or from the scaling shifter S which is loaded from data memory via D-bus.

The scaling shifter S has a 16-bit input connected to the data bus D-bus and a 32-bit output connected to the ALU, and produces a left shift of 0-to-15 bits on the input data, as programmed in certain bits of the instruction. The LSBs of the output are filled with zeros, and the MSBs may be either filled with zeros or sign-extended, depending upon the status programmed into the sign-extension mode bit SXM of status register STO.

The 32-bit wide arithmetic logic unit ALU and accumulator Acc perform a wide range of arithmetic and logical instructions, the majority of which execute in a single clock cycle. The overflow saturation mode may be programmed through the SOVM and ROVM (set or reset overflow mode) instructions. When the accumulator is in the overflow saturation mode and an overflow occurs, the accumulator Acc is loaded with the most positive or negative number, depending upon the direction of overflow. Data that is input to the ALU may be scaled by the scaling shifter S.

The processor executes branch instructions that depend on the status of the ALU. The BACC (branch to address in accumulator) instruction provides the ability to branch to an address specified by the accumulator. The BIT (test bit) and BITT (test bit specified by the T register) instructions allow the testing of a specified bit of a word in data memory, e.g. RAM 15.

The processor supports floating-point operations for applications requiring a large dynamic range. A normalization (NORM) instruction is used to normalize fixed-point numbers contained in the accumulator by performing left shifts. The LACT (load accumulator with shift specified by the T register) instruction denormalizes a floating-point number by arithmetically left-shifting the mantissa through the input scaling shifter. The shift count, in this case, is the value of the exponent specified by the four low-order bits of the T register. ADDT and SUBT (add to or subtract from accumulator with shift specified by T register) instructions have also been provided to allow additional arithmetic operations. Floating-point numbers with 16-bit mantissas and 4-bit exponents can thus be manipulated.

The 32-bit accumulator Acc is split into two 16-bit segments for storage in data memory: ACCH (accumulator high) and ACCL (accumulator low). Additional shifters at the output of the accumulator provide a shift of 0, 1, or 4 places to the left. This shift is performed while the data is being transferred to the data bus D-bus for storage; the contents of the accumulator Acc remain unchanged. When the ACCH data is shifted left, the LSBs are transferred from the ACCL, and the MSBs are lost. When ACCL is shifted left, the LSBs are zero-filled, and the MSBs are lost.

The accumulator Acc also has an in-place one-bit shift to the left or fight (SFL or SFR Instructions) for shifting the contents of the accumulator. The SXM bit also affects the definition of the SFR (shift accumulator right) instruction. When SXM = 1, SFR performs an arithmetic right shift, maintaining the sign of the accumulator data. When SXM = 0, SFR performs a logical shift, shifting out the LSB and shifting in a zero for the MSB. The SFL (shift accumulator left) instruction is not affected by the SXM bit and behaves the same in both cases, shifting out the MSB and shifting in a zero. RPT or RPTC may be used with these instructions for multiple shift counts.

The two's complement 16x16-bit hardware multiplier M is capable of computing a 32-bit product in a single machine cycle. Two registers are associated with the multiplier: a 16-bit temporary register TR that holds one of the operands for the multiplier; and a 32-bit product register P that holds the product resulting from the multiply operation. Normally, an LT (load T register) instruction loads T to provide one operand (from the data bus), and the MPY (multiply) instruction provides the second operand (also from the data bus). In this case, a product can be obtained every two cycles (one for load T, one for multiply).

Two multiply/accumulate instructions (MAC and MACD) fully utilize the bandwidth of the multiplier M, allowing both operands to be processed simultaneously. For MAC and MACD, the two operands are transferred to the multiplier M each cycle via the program and data buses P-bus and D-bus. This provides for single-cycle multiply/accumulates when used with the RPT or RPTK instruction. The SQRA (square/add) and SQRS (square/subtract) instructions pass the same value to both inputs of the multiplier when squaring a data memory value.

After the multiplication of two 16-bit two's complement numbers, the 32-bit product is loaded into the 32-bit product register P. The product may be transferred to the ALU directly, or optionally shifted before it is transferred to the ALU input. Four shift modes for the product register P output are available. The PM field of status register ST1 specifies this shift mode P: if 00, no shift; if 01, left shift of 1 bit; if 10, left shift of 4 bits; if 11, right shift of 6 bits. Left shifts specified by the Pm value are useful for implementing fractional arithmetic. Using the right-shift PM value allows 127 multiply/accumulates (or more) to be executed without accumulator overflow. The four least significant bits of the T register also define a variable shift through the scaling shifter S for the LACT/ADDT/SUBT (load/add to/subtract from accumulator with shift specified by T reg) instructions. These instructions are useful in floating-point arithmetic where a number needs to be denormalized, i.e., floating-point to fixed-point conversion. A bit test instruction (BITT) allows testing of a single bit of a word in a data memory based on the value contained in the four LSBs of the T register.

The CPU has two status registers, ST0 and ST1, that contain the status of various conditions and modes. The SST and SST1 instructions provide for storing the status registers into data memory. The LST and LST1 instructions load the status registers from data memory. In this manner, the current status of the device may be saved on interrupts and calls. See below for information about the organization of the status registers and the function of the status bits.

SYSTEM CONTROL AND INTERFACE

System control operations are provided on the processor chip by an on-chip timer, a repeat counter, external and internal interrupts, and an external reset signal.

The memory-mapped 16-bit timer used for external control operations is a down counter that is continuously clocked by an internal clock. This clock derived by dividing the CLKOUT1 frequency by four. Reset sets the timer to its maximum value (FFFF) but does not initialize the period register PRD. Upon release of reset, the timer begins decrementing. Following this, the timer or the period register PRD may be reloaded under program control by an instruction.

A timer interrupt TINT is generated every time the timer decrements to zero. The timer is reloaded with the value contained in the period register PRD within the same cycle that it reaches zero so that interrupts may be programmed to occur at regular intervals of 4x(PRD) CLKOUT1 cycles. This feature is useful for synchronously sampling or writing to peripherals. The timer register TIM and period register PRD may be accessed at any time by an instruction. A period register value of zero is not allowed. If the timer is not used, the timer interrupt should be masked or all maskable interrupts disabled by a DINT instruction.

A repeat feature allows a single instruction to be performed up to 256 times. The repeat counter RPTC is loaded with either a data memory value (via an RPT instruction) or an immediate value (RPTK instruction). The value of this operand is one less than the number of times that the next instruction is executed. The repeat feature can be used with instructions such as multiply/accumulates, block moves, I/O transfers, and table read/writes. Those instructions that are normally multicycle are pipelined when using the repeat feature, and effectively become single-cycle instructions. For example, the table read instruction ordinarily takes three cycles, but when repeated, a table location can be read every cycle due to the overlap.

The processor chip has three external maskable user interrupts, INT2-INT0, available for external devices that interrupt the processor. Internal interrupts are generated by the serial port (RINT and XINT), by the timer (TINT), and by the software interrupt (TRAP) instruction. Interrupts are prioritized with reset having the highest priority and the serial port transmit interrupt having the lowest priority. All interrupt locations in the memory map are on two-word boundaries so that branch instructions can be accommodated in those locations if desired. Control circuitry protects multicycle instructions from interrupts; if an interrupt occurs during a multicycle instruction, the interrupt is not processed until the instruction is completed. This mechanism applies both to instructions that are repeated or become multicycle due to the READY signal.

The use of the RS signal on the control bus asynchronously causes the processor to terminate execution and forces the program counter PC to zero. For system operation upon powerup, a reset (RS) signal must be asserted for at least five clock cycles to guarantee a reset of the device. Processor execution begins at location O, of the map of Fig. 7b, which normally contains a branch instruction to direct program execution to the system initialization routine.

The data, program, and I/O address spaces of Fig. 7b provide interface to memory and I/O. The local memory interface consists of: a 16-bit parallel data bus D; a 16-bit address bus RA; data, program, and I/O space select (DA, PS, and IS) signals; and other system control signals. The R/W signal controls the direction of the transfer, and STRB provides a timing signal to control the transfer. I/O design is simplified by having I/O treated the same way as memory. I/O devices are mapped into the I/O address space using the processor's external address and data buses in the same manner as memory-mapped devices, but using the select signals. Interface to memory and I/O devices of varying speeds is accomplished by using the READY line. When transactions are made with slower devices, the processor waits until the other device completes its function and signals the processor via the READY line. Then, the processor chip continues execution.

A serial port provides communication with serial devices, such as codecs, serial A/D converters, and other serial systems, with a minimum of external hardware. The serial port may also be used for intercommunication between processors in multiprocessing applications. The serial port has the following two memory-mapped registers: the data transmit register DXR; and the date receive register DRR. Since these registers are memory-mapped, they may be accessed in the same manner as any other data memory location. Both the DRR and DXR registers have shift registers associated with them that define the bit to be received or transmitted (starting with the MSB). An external clock CLKX is coupled to the DXR, and a mode bit TXM determines whether the framing pulse (FSX) is generated on-chip or comes from off-chip. The DRR has a serial-port clock CLKR and an FSR pulse coupled to it. The serial port operates in either the byte mode or 16-bit word mode.

The flexibility of this architecture allows configurations to satisfy a wide range of system requirements, including systems where the processor chip is: a standalone processor; a multiprocessor with devices in parallel; a slave/host multiprocessor with global memory space; or a peripheral processor interfaced via processor-controlled signals to another device. The various multiprocessing configurations are described below.

For multiprocessing applications, the processor chip has the capability of allocating global data memory space and communicating with that space via the BR (bus request) and READY control signals. Global memory is data memory shared by more than one processor. Global data memory access must be arbitrated. The 8-bit memory-mapped memory allocation register GREG specifies part of the data memory space as global external memory. The contents of the register GREG determine the size of the global memory space. If the current instruction addresses an operand within that space, bus request BR is asserted to request control of the bus. The length of the memory cycle is controlled by the READY line.

The processor supports DMA (direct memory access) to its external program/data memory using the HOLD and HOLDA signals. Another processor can take complete control of the external memory by asserting HOLD low causing the processor to tristate its address, data, and control lines.

INTERRUPTS

The processor 10 of Fig. 3 has seven prioritized vectored interrupts (listed in order of priority highest to lowest): Reset; user Interrupts #0, #1, and #2; Internal Timer Interrupt; Serial Port Receive Interrupt; and Serial Port Transmit Interrupt. All interrupts, except for reset, are maskable.

Reset is a non-maskable external interrupt that can be used at any time to put the chip into a known state; Reset is typically applied after powerup when the machine is in a random state. When reset is activated by applying a low level to the RA (reset) input pin on the control bus 13, the asynchronously terminates execution of a current instruction and forces the program counter PC to zero. Program memory location 0 normally contains a Branch instruction in order to direct program execution to the system initialization routine. The reset initializes various registers and status bits.

Upon receiving an RS signal, the following actions take place: a logic 0 is loaded into the CNF bit in status register ST1, causing all RAM to be configured as data memory; the program counter PC is set to 0, and the address bus RA is driven with all zeroes while RA is low; the data bus D is tristated by the I/O buffers; all memory and I/O space control signals (PS, DS, IS R/W, STRB, and BR) are de-asserted by setting them to high levels while RS is low; all interrupts are disabled by setting the INTM bit to a high level (Note that RS is non-maskable, and also the IFR is reset to all zeroes; status bit is reset to 0, XF is set to 1; the GREG is cleared to make all memory local; the RPTC is cleared; the DX pin is tristated and any transmit/receive operations on the serial port are terminated, and the TXM bit is reset to a low level, to configure the RSX pin to be an input; the timer register TIM is set to FFFF and does not begin decrementing until RS is de-asserted, but the period register is unaffected; the IACK signal is generated in the same manner as a maskable interrupt; and the serial port format bit FO is reset to a logic zero.

Execution starts from location 0 of external program memory when the RS signal is taken high. Note that if RS is asserted while in the hold mode, normal reset operation occurs internally, but all busses and control lines remain tristated. Upon release of HOLD and RS, execution starts from location zero.

Vector locations and priorities for all internal and external interrupts are shown below. As shown in this table, reset has the highest priority, and the serial port transmit interrupt has the lowest priority. The TRAP instruction, used for software interrupts, is not prioritized but is included here since it has its own vector location. Each interrupt address has been spaced apart by two locations so that branch instructions can be accommodated in the intervening off-numbered memory locations.

| INTERRUPT NAME | MEMORY LOCATION | PRIORITY | FUNCTION |
|---|---|---|---|
| RS | 0 | 1(highest) | External reset signal |
| INTO | 2 | 2 | External user interrupt #0 |
| INT1 | 4 | 3 | External user interrupt #1 |
| INT2 | 6 | 4 | External user interrupt #2 |
| TINT | 24 | 5 | Internal timer interrupt |
| RINT | 26 | 6 | Serial port receive interrupt |
| XINT | 28 | 7(lowest) | Serial port transmit interrupt |
| TRAP | 30 | N/A | TRAP instruction address |

When an interrupt occurs, it is stored in the 6-bit interrupt flag register IFR. This register is set by the external user interrupts INT(2-0) and the internal interrupts RINT, XINT, and TINT. Each interrupt is stored until it is recognized and then cleared by the interrupt acknowledge IACK signal or the RS signal on the control bus 13. The RS signal is not stored in the IFR. No instructions are provided for reading from or writing to the IFR.

The processor has a memory-mapped interrupt mask register IMR for masking external and internal interrupts. Only the six LSBs of the 16-bit space is used in IMR> A '1' in bit positions 5 through 0 of the IMR enables the corresponding interrupt, provided that INTM = 0. The IMR is accessible from D-bus with both read and write operations but cannot be read using BLKD. RS is not included in the IMR, and therefore the IMR has no effect on reset.

The interrupt mode INTM, bit 9 of status register STO, enables or disables all maskable interrupts. A '0' in INTM enables all the unmasked interrupts, and a '1' disables these interrupts. the INTM is set to a '1' by the interrupt acknowledge signal IACK, the DINT instruction, or a reset. This bit if reset to a '0' by the EINT instruction. INTM does not actually modify the IMR or interrupt flag register IFR.

The control circuitry ID protects multicycle instructions; an interrupt occurs during a multicycle instruction, the interrupt is not processed until the instruction is completed. The control circuitry will also not allow interrupts to be processed when an instruction is being repeated via the RPT or RPTK instructions. The interrupt is stored in the IFR until the repeat counter RPTC decrements to zero, and then the interrupt will be processed. Even if the interrupt is de-asserted while processing the RPT or RPTK instruction the interrupt will still be latched by IFR and be pending until RPTC decrements to zero. Interrupts cannot be processed between EINT and the next instruction in a program sequence. For example, if an interrupt occurs during an EINT instruction execution, the device always completes EINT as well as the following instruction before the pending interrupt is processed. This insures that a RET can be executed before the next interrupt is processed, assuming that a RET instruction follows the EINT. The state of the machine, upon receiving an interrupt, may be saved and restored.

Status Registers

The processor has two status registers, ST0 and ST1, that contain the status of various conditions and modes.

Note that the DP, ARP, and ARB registers are shown as separate registers in the processor block diagram of Figure 3. Because these registers do not have separate instructions for storing them into RAM, they are included in the status registers. The capability of storing the status registers into data memory and loading them from data memory allows the status of the machine to be saved and restored for interrupts and subroutines. All status bits are read from and written to using LST, LST1, SST, and SST1 instructions (with the exception of INTM which cannot be loaded via an LST instruction). However, some additional instructions or functions may affect those bits as indicated in the Table.

Context Switching

Context switching is commonly required when processing a subroutine call or interrupt. In a context switch on the processor of Fig. 3, several mechanisms are used to save the current state of the processor. For example, the program counter PC is stored automatically on the hardware stack ST. If there is any important information in the other registers, such as the status or auxiliary registers, these must be saved by software command. A stack in data memory RAM 15, identified by an auxiliary register AR0-AR4 is useful for storing the machine state when processing interrupts. The selected AR functions as a stack pointer. The machine registers are saved in RAM 15 and restored in the same order; the registers saved are ACCH, ACCL, AR0 through AR3, PR, ST0, ST1 TR, and the four levels of the hardware stack ST.

Memory Management

The structure of the memory map of Fig. 4b is programmable and can vary for each task of the processor. Instructions are provided for moving blocks of external data memory or program memory into data memory, configuring a block of on-chip data RAM as program memory, and defining part of external data memory as global. Examples of moving, configuring, and manipulating memory will be briefly described.

Since the processor directly addresses two areas of 64K memory, blocks of data or program code can be stored off-chip in slow memories and then loaded on-chip for faster execution. The BLKD and BLKP instructions facilitate memory-to-memory block moves on the processor TMS32020. THE BLKD instruction moves a block within data memory, usually by preceding it with a RPTK instruction containing a number such as 255 to move 256 words.

The configurability of on-chip RAM and the large amount of external memory simplify the down loading of data or program memory into the chip 10. Also, since data in the RAM 15 is preserved when redefining on-chip RAM, RAM 15P can be configured dynamically for both data and program memory. Figure 4 illustrates the changes in on-chip RAM when switching configurations; in particular, the CONFD and CONFP instructions change the effective address of the RAM 15P, and change its address and data busses. On-chip memory is configured by a reset or by the CNFD and CNFP instructions. RAM 15P is configured as data memory by executing CNFD or reset; or a CNFP instruction configures this block as program memory. For example, program code can be loaded to RAM 15P using BLKD, then a CNFP instruction executed to reconfigure, then code executed from RAM 15P. The first instruction fetch after a CNFP or CNFD instruction is taken from the previous memory configuration; i.e., a CNFP instruction must be placed at external program memory location 65,278 if execution is to begin from the first word of RAM 15P at location 65280 after one more external instruction fetch. If the instruction placed at location 65,279 is a two-word instruction, the second word is then fetched from the first location in RAM 15P. Alternatively, the user may execute from external program memory 12 if all of the on-chip RAM is to be used as data memory. RAM 15 is always mapped into the data memory space. For almost all of the instructions, execution time is the same for programs in on-chip RAM as for programs in external memory operating with no wait states, assuming that the data is in internal RAM. An exception to this is the IN and OUT instructions. When executed from on-chip RAM, these instructions execute in one cycle.

Global memory is memory shared by more than one processor, therefore, access to it must be arbitrated. When using global memory, the processor's address space is divided into local and global sections. The local section is used by the processor to perform its individual function, and the global section is used to communicate with other processors. A memory-mapped register GREG is provided in the processor that allows part of data memory to be specified as global external memory. GREG, which is memory-mapped at data memory address location 5, is an eight-bit register which is connected to the eight LSBs of the internal D-bus. The contents of GREG determine the size of the global memory space. The legal values of GREG and corresponding global memory spaces are shown below:

| | | LOCAL MEMORY | | GLOBAL MEMORY | |
|---|---|---|---|---|---|
| GREG VALUE | RANGE | # WORDS | RANGE | # WORDS |
| 000000XX | 0-65,535 | 65,536 | -------------- | 0 |
| 10000000 | 0-32,767 | 32,768 | 32,768-65,535 | 32,768 |
| 11000000 | 0-49,151 | 49,152 | 49,152-65,535 | 16,384 |
| 11100000 | 0-57,343 | 57,344 | 57,344-65,535. | 8,192 |
| 11110000 | 0-61,439 | 61,440 | 61,440-65,535 | 4,096 |
| 11111000 | 0-63,487 | 63,488 | 63,488-65,535 | 2,048 |
| 11111100 | 0-64,511 | 64,512 | 64,512-65,535 | 1,024 |
| 11111110 | 0-65,023 | 65,024 | 65,024-65,535 | 512 |
| 11111111 | 0-65,279 | 65,280 | 65,280-65,535 | 256 |

If an instruction addresses data in global memory, the BR bus request signal BR on the control bus 13 is asserted to request the use of global memory. Before performing the memory access, the control circuitry checks to see if READY is asserted. When READY is asserted, the global memory access is performed. After completion of the global memory access cycle and if the bus arbitration logic continues to assert READY, the processor performs a global memory access every machine cycle until READY is removed.

Timer Operation

The processor uses an on-chip timer and its associated interrupt to perform various functions at regular time intervals. By loading the period register PRD with a value from 1 to 65,535 (FFFF), a timer interrupt TINT can be generated every 4 to 262,144 cycles, respectively. Two memory-mapped registers are used to operate the timer. The timer register TIM, data memory location 2, holds the current count of the timer. At every fourth CLKOUT1 cycle, the TIM is decremented by one. The PRD register, data memory location 3, holds the starting count for the timer. When TIM decrements to zero, a timer interrupt TINT is generated. In the same cycle, the contents of the PRD register are loaded into the TIM register. In this way, a TINT is generated every 4 x (PRD) cycles of CLKOUT1. The timer and period registers can be read from or written to on any cycle via D-bus. The count can be monitored by reading the TIM register. A new counter period can be written to the period register without disturbing the current timer count. The timer will then start the new period after the current count is complete. If both the PRD and TIM registers are loaded with a new period, the timer begins decrementing the new period without generating an interrupt. Thus, the programmer has complete control of the current and next periods of the timer. The TIM register is set to its maximum value (FFFF) on reset and begins decrementing only after RS is de-asserted. The period register is not set during reset. If the timer is not used, TINT should be masked. The PRD can then be used as a general-purpose data memory location. If TINT is used, the PRD and TIM registers should be programmed before unmasking the TINT.

Single-Instruction Loops

When programming time-critical high-computational tasks, it is often necessary to repeat the same operation many times. Since the processor hat a high degree of parallelism, many of the instructions perform a complete operation (such as the MACD instruction). For these cases, a repeat instruction that allows the execution of the next single instruction N+1 times is provided. N is defined by an eight-bit repeat counter RPTC, which is loaded by the RPT or RPTK instructions via D-bus. The instruction immediately following is then executed, and the RPTC register is decremented until it reaches zero. When using the repeat feature, the instruction being repeated is fetched only once. As a result, many multicycle instructions become one or two cycle when they are repeated. This is especially useful for I/O instructions, such as TBLR, TBLW, IN, or OUT. Programs, such as filter implementation, require loops that can be controlled in as little time as possible.

12

External Branch Control

The processor has an externally controlled branch instruction that gives the system designer an alternative to interrupts for monitoring external conditions. An external pin labeled B10 (branch on I/O) is tested by the BIOZ instruction, which branches if the pin is at a low level. The branch on I/O feature is useful for polling a single interrupt separately from the interrupt register. In addition, the BIO pin is not latched. This makes the BIO function useful for monitoring devices that need to be serviced only when certain conditions are true or become true.

External Read/Write Operations

The processor has program, data, and I/O address spaces for interfacing to external memory and I/O. Accessing these address spaces is controlled by the PS, DS, and IS (program, data and I/O select) processor signals on the control bus 13. The system is straightforward since the processor handles each address space in the same manner.

The sequence of events for an external read cycle is listed below:

1) During clock quarter-phase 3, the processor begins driving the address bus and one of the memory space select signals. R/W is driven high to indicate an external memory read.

2) At the beginning of quarter-phase 4, STRB is asserted to indicate that the address bus is valid. STRB, in conjunction with R/W, may be used to gate a read enable signal.

3) After decoding the addressed memory area, the user's memory interface must set up the appropriate READY signal during quarter-phase 4. READY is sampled by the processor at the beginning of quarter-phase 1.

4) If READY was high at the proper time, the data is clocked in at the end of quarter-phase 1.

5) STRB is deasserted at the beginning of quarter-phase 2. The processor ends the memory access by deactivating the address bus and PS, DS, or IS.

The control signals PS, DS, IS, STRB, and R/W are only asserted when an external address location is being accessed.

The sequence of events for an external write cycle is listed below, and Figure 9b shows the write cycle timing:

1) During clock quarter-phase 3, the processor begins driving the address bus PA and one of the memory space select signals. R/W is driven low to indicate an external memory write.

2) At the beginning of quarter-phase 4, STRB is asserted to indicate that the address bus is valid. STRB, in conjunction with R/W, may be used to gate a write enable signal.

3) After decoding the addressed memory area, the user's memory 12 interface must provide the appropriate logic level to the READY signal input during quarter-phase 4. READY is sampled by the processor at the beginning of quarter-phase 1.

4) The data bus starts to be driven at the start of quarter-phase 4.

5) STRB is then deasserted at the beginning of quarter-phase 2. The processor ends the memory access by deactivating the address bus and PS, DS, or IS.

The number of cycles in a memory or I/O access is determined by the state of the READY input. At the start of quarter-phase 1, the processor samples the READY input. If READY is high, the memory access ends at the next falling edge of CLKOUT1. If READY is low, the memory cycle is extended by one machine cycle, and all other signals remain valid. At the beginning of the next quarter-phase 1, this sequence is repeated.

**Claims**

1.   A microcomputer device formed in a single integrated circuit and having data input and output terminals and address output terminals (RA), the device comprising within said integrated circuit

an arithmetic logic unit (ALU) having a data input and a data output,

a control circuit (ID) responsive to instruction words selected from an instruction set having outputs connected to said arithmetic logic unit, the control circuit generating micro-control signals on said output to cause said arithmetic logic unit to execute instructions represented by the instruction words,

a read/write data memory (15) having an address input and data input and output,

a program memory (10,15P) having an address input and at least a program output, and

internal data and address buses (D-BUS,P-BUS) interconnecting said arithmetic logic unit, said control circuit and said memories and coupled to said data input and output terminals and said address

13

output terminals,
        characterised in that
said control circuit (ID) includes a repeat counter, and said instruction set includes a "repeat" instruction word containing a number, the "repeat" instruction word being followed by another selected instruction word from said instruction set, and being such that the instruction represented by said selected instruction word is executed by said control circuit the number of times defined by the number included in said "repeat" instruction word, said number being stored in said repeat counter which is decremented with each execution of the selected instruction.

2. A microcomputer device according to claim 1
        characterised in that
        said selected instruction word represents the transfer of an item of data from the memory location at a first address to the memory location at a second address, and said "repeat" instruction word followed by said selected instruction word causes the transfer of a block of data in locations starting at said first address to locations starting at said second address, the number of items of data in said block being defined by the number contained in the "repeat" instruction word.

3. A microcomputer system comprising a microcomputer device according to claim 1 or claim 2, an external read/write memory (11) having an address input and data input and output, an external address bus connected to the address output terminals of the microcomputer device and to the address input of the external memory, and an external data bus connected to the data input and output terminals of the microcomputer device and to the data input and output of the external memory.

## Patentansprüche

1. In einer einzigen integrierten Schaltung gebildete Mikrocomputervorrichtung mit Dateneingangs- und Datenausgangsanschlüssen und mit Adressenausgangsanschlüssen (RA), wobei die Vorrichtung in der integrierten Schaltung enthält
eine Rechen- und Logikeinheit (ALU) mit einem Dateneingang und einem Datenausgang,
eine Steuerschaltung (ID), die abhängig von aus einem Befehlssatz ausgewählten Befehlswörtern arbeitet und mit der Rechen- und Logikeinheit verbundene Ausgänge aufweist, wobei die Steuerschaltung an dem Ausgang Mikrosteuersignale erzeugt, die die Rechen- und Logikeinheit veranlassen, Befehle auszuführen, die durch die Befehlswörter repräsentiert werden,
einen Lese/Schreib-Datenspeicher (15) mit einem Adresseneingang sowie einem Dateneingang und einem Datenausgang,
einen Programmspeicher (10, 15P) mit einem Adresseneingang und wenigstens einem Programmausgang, und
interne Daten- und Adressenbusse (D-BUS, P-PUS), die die Rechen- und Logikeinheit, die Steuerschaltung und die Speicher miteinander verbinden und an die Dateneingangs- und Datenausgangsanschlüsse sowie die Adressenausgangsanschlüsse angeschlossen sind,
dadurch gekennzeichnet,
daß die Steuerschaltung (ID) einen Wiederholungszähler enthält und der Befehlssatz ein "Wiederholungs"-Befehlswort enthält, in dem eine Nummer enthalten ist, wobei auf das "Wiederholungs"-Befehlswort ein weiteres aus dem Befehlssatz ausgewähltes Befehlswort folgt, und wobei sie so ausgebildet ist, daß der von dem ausgewählten Befehlswort repräsentierende Befehl von der Steuerschaltung so oft ausgeführt wird, wie durch die in dem "Wiederholungs"-Befehlswort enthaltene Nummer festgelegt ist, wobei die Nummer in dem Wiederholungsspeicher gespeichert ist, der mit jeder Ausführung des ausgewählten Befehls dekrementiert wird.

2. Mikrocomputervorrichtung nach Anspruch 1, dadurch gekennzeichnet, daß das ausgewählte Befehlswort die Übertragung eines Datenpostens aus dem Speicherplatz an einer ersten Adresse zu dem Speicherplatz an einer zweiten Adresse repräsentiert, und das "Wiederholungs"-Befehlswort, auf das das ausgewählte Befehlswort folgt, die Übertragung eines Datenblocks in mit der ersten Adresse beginnenden Speicherplätzen zu mit der zweiten Adresse beginnenden Speicherplätzen verursacht, wobei die Anzahl der Datenposten in dem Block durch die in dem "Wiederholungs"-Befehlswort enthaltene Nummer festgelegt ist.

3. Mikrocomputersystem enthaltend eine Mikrocomputervorrichtung nach Anspruch 1 oder Anspruch 2, einen externen Lese/Schreib-Speicher (11) mit einem Adresseneingang und einem Dateneingang sowie einem Datenausgang, einem externen Adressenbus, der an die Adressenausgangsanschlüsse der Mikrocomputervorrichtung und an dem Adresseneingang des externen Speichers angeschlossen ist, und einen externen Datenbus, der mit den Dateneingangs- Datenausgangsanschlüssen der Mikrocomputervorrichtung und mit dem Dateneingang und dem Datenausgang des externen Speichers verbunden ist.

**Revendications**

1. Dispositif de microprocesseur sous forme d'un circuit intégré unique et ayant des bornes d'entrée et de sortie de données et des bornes de sortie d'adresse (RA), le dispositif comprenant dans ledit circuit intégré

une unité arithmétique et logique (ALU) ayant une entrée de données et une sortie de données,

un circuit de commande (ID) répondant à des mots d'instruction sélectionnés dans un ensemble d'instructions et ayant des sorties reliées à ladite unité arithmétique et logique, le circuit de commande produisant des signaux de microcommande sur ladite sortie de manière à amener ladite unité arithmétique et logique à exécuter des instructions représentées par les mots d'instruction,

une mémoire de données à lecture-écriture (15) ayant une entrée d'adresse et une entrée et une sortie de données,

une mémoire de programme (10, 15P) ayant une entrée d'adresse et au moins une sortie de programme, et

des bus internes de données et d'adresse (D-BUS, P-BUS) interconnectant ladite unité arithmétique et logique, ledit circuit de commande et lesdites mémoires, et couplés auxdites bornes d'entrée et de sortie de données et auxdites bornes de sortie d'adresse,

caractérisé en ce que

ledit circuit de commande (ID) comprend un compteur de répétitions, et ledit ensemble d'instructions comprend un mot d'instruction "répéter" contenant un nombre, le mot d'instruction "répéter" étant suivi par un autre mot d'instruction sélectionné dans ledit ensemble d'instructions, et étant tel que l'instruction représentée par ledit mot sélectionné d'instruction soit exécutée par ledit circuit de commande le nombre de fois défini par le nombre inclus dans ledit mot d'instruction "répéter", ledit nombre étant stocké dans ledit compteur de répétitions qui est décrémenté à chaque exécution de l'instruction sélectionnée.

2. Dispositif de microprocesseur selon la revendication 1,

caractérisé en ce que

ledit mot sélectionné d'instruction représente le transfert d'un élément de données de l'emplacement de mémoire à une première adresse vers l'emplacement de mémoire à une deuxième adresse, et ledit mot d'instruction "répéter" suivi par ledit mot sélectionné d'instruction provoque le transfert d'un bloc de données dans des emplacements commençant à ladite première adresse vers des emplacements commençant à ladite deuxième adresse, le nombre d'éléments de données dans ledit bloc étant défini par le nombre contenu dans le mot d'instruction "répéter".

3. Système à microprocesseur comprenant un dispositif de microprocesseur selon la revendication 1 ou la revendication 2, une mémoire externe de lecture-écriture (11) ayant une entrée d'adresse et une entrée et une sortie de données, un bus externe d'adresse relié aux bornes de sortie d'adresse du dispositif de microprocesseur et à l'entrée d'adresse de la mémoire externe, et un bus externe de données relié aux bornes d'entrée et de sortie de données du dispositif de microprocesseur et à l'entrée et à la sortie de données de la mémoire externe.

Fig. 1

Fig.2a

Fig. 2b

Fig. 3a

Fig. 3b

PROGRAM

0

DATA

0

I/O

0
7

*Fig. 4a*

PROGRAM
ADDRESS
SPACE

0    INTERRUPTS &
      RESERVED
32

EXTERNAL
MEMORY

65,279
          ON-CHIP
          RAM 15P
65,535

CNFP
INSTRUCT

CNFD
INSTRUCT

DATA
ADDRESS
SPACE

0    ON-CHIP-MEM.
      MAPPED REGS.
5

      WORDS 256 TO
      288 TO RAMIS

511
          ON-CHIP
          RAM 15P
767
          ON-CHIP
          RAM 15
1023

      EXTERNAL
      MEMORY

65,535

I/O
ADDRESS
SPACE

0

15

*Fig. 4b*